# EUROPÄISCHE PATENTSCHRIFT

(11) **EP 1 701 156 B1**
(45) Veröffentlichungstag und Bekanntmachung des Hinweises auf die Patenterteilung: **14.05.2008**
(21) Anmeldenummer: 06004837.8
(22) Anmeldetag: 08.03.2006
(51) Int. Cl.: G01N 27/90

(54) **Vorrichtung zur Prüfung eines Prüflings auf Oberflächenfehler mittels Magnetisierungsmittel und mittels Induktionssonden als Meßsensoren**
Device for testing a test piece for surface defects by means of magnetising means and by means of induction probes used as measuring sensors
Dispositif destiné à la vérification de défauts de surface sur un échantillon à l'aide d'un moyen de magnétisation et à l'aide de sondes à induction en tant que capteurs de mesure

(43) Veröffentlichungstag der Anmeldung: 13.09.2006
(73) Patentinhaber: Prüftechnik Dieter Busch AG, 85737 Ismaning (DE)
(72) Erfinder: Zimmermann, Bernd, 79241 Ihringen (DE)

(56) Entgegenhaltungen:
- DE-A1- 3 937 261
- GB-A- 2 034 049
- US-A- 5 517 114
- PATENT ABSTRACTS OF JAPAN Bd. 1999, Nr. 12, 29. Oktober 1999 (1999-10-29) -& JP 11 202084 A (HITACHI LTD), 30. Juli 1999 (1999-07-30)
- PATENT ABSTRACTS OF JAPAN Bd. 1998, Nr. 14, 31. Dezember 1998 (1998-12-31) & JP 10 232222 A (EE ONE KK), 2. September 1998 (1998-09-02)

## Beschreibung

Die Erfindung betrifft eine Vorrichtung zur Prüfung eines Prüflings auf Oberflächenfehler mittels Magnetisierungsmittel zum Einleiten eines Magnetflusses in den Prüfling und mittels Induktionssonden als Meßsensoren, wobei die Induktionssonden um den in Längsrichtung führbaren Prüfling drehbar sind, um ihn schraubenförmig abzutasten.

Derartige Vorrichtungen werden eingesetzt, um z. B. Oberflächenfehler an metallischen Gegenständen kreisförmigen Profils, wie Knüppel, Stangen Stahlrohre oder dergleichen zu ermitteln, während diese Gegenstände, die je nach Wahl des Fertigungsverfahrens hohe Temperaturen aufweisen können, durch eine Fertigungsstraße, beispielsweise eine Walzstraße, laufen.

Magnetisierungsmittel magnetisieren den Prüfling derart, daß oberflächennahe Fehler einen Streufluß erzeugen, der mittels Induktionssonden detektiert werden kann. Fehler in und unter der Oberfläche eines Prüflings verursachen z.B. einen Streufluß, der mittels der Induktionssonden detektiert wird. Die Ausgangssignale der Induktionssonden sind daher ein Maß für die Unreinheiten und Fehler in und unter der Oberfläche eines Prüflings. Die Induktionssonden zur Fehlererkennung sind nahe der Umfangswandung des Prüflings angeordnet. Die Induktionssonden können geeignet sein, magnetische Streuflüsse zu detektieren, oder als Wirbelstromsensorcn ausgelegt sein. Die Induktionssonden können auch auf Basis magnetoresistiver Effekte funktionieren.

JP11202084 offenbart eine Vorrichtung zur Detektion von Blasen in einer Metallschmelze,
wobei diese Schmelze durch ein Rohr fliesst, und zum Magnetisieren der Schmelze an den Jochschenkeln angebrachte Erregerspulen eingesetzt werden, die sich in unmittelbarer Umgebung zu dem Rohr befinden.

GB2034049 offenbart einen Rotierkopf zum Prüfen von langgestrecktem ferromagnetischem Prüfgut, wobei der Abstand der Magnetisierungs- und Detektionsmittel zum Prüfgut in Abhängigkeit des Durchmessers des Prüfguts einstellbar ist.

In DE 39 37 261 C2 ist eine derartige Vorrichtung, ein Rotierkopf, zum Abtasten von metallischem Prüfgut beschrieben. Dieser Rotierkopf ist im wesentlichen aus einem Gehäuse mit einer Hohlwelle zum Durchführen eines Prüflings und einem Rotierteil aufgebaut, an dem Induktionssonden, z. B. Wirbelstromgeber, befestigt sind. Es sind ferner Antriebsmittel vorgesehen, um die Umlaufbewegung des Rotierteils zu erzeugen. Das Antriebsrad eines Antriebsmotors ist über einen Treibriemen mit einem starr auf der Hohlwelle sitzenden Treibrad verbunden. Am vorderen und hinteren Ende der

Hohlwelle sitzt je eine Schutzbuchse, durch welche der Prüfling geführt wird. Eine Rotierscheibe ist starr mit der Hohlwelle verbunden. Auf der Hohlwelle sind zwei Hebel schwenkbar befestigt, welche je eine Induktionssonde tragen. In den Prüfling wird ein Magnetfluß in Längsrichtung mittels einer ihn umfassenden Magnetisierungsspule und mittels Magnetflußleiter geleitet. Als Magnetflußleiter dienen Teile des Gehäuses und die Hohlwelle. Zur Homogenisierung des Magnetfeldes im Prüfungsbereich ist ein Homogenisierungsring aus einem magnetisch leitenden Werkstoff vorgesehen.

Aus DE OS 29 05 399 ist eine weitere derartige Vorrichtung bekannt. Ein Prüfling ist durch ein zylinderförmiges Element führbar, das um seine Längsachse drehbar ist. Am zylindrischen Element sind nahe an dessen Umfangswandung mehrere Induktionssonden befestigt, die als Wirbelstromfehlerdetektorspulen ausgebildet sind. Durch Drehen des zylinderförmigen Elementes und gleichzeitiges Führen des Prüflings in Längsrichtung wird der Prüfling schraubenförmig durch die Spulen abgetastet. Die Ausgangssignale der Spulen werden in einem Signaldetektorkreis ausgewertet. An die Spulen wird ein Wechselstromsignal fester Frequenz gelegt, das kurz unterhalb der Oberfläche des Prüflings einen Wirbelstrom erzeugt. Fehler im Prüfling verändern die Spulenimpedanz. Der Magnetfluß verläuft im Prüfling in Längsrichtung auf und unterhalb der Manteloberfläche des Prüflings.

Die angegebenen bekannten Vorrichtungen sind mit dem ersten Nachteil behaftet, daß sie nicht schnell und kostengünstig an unterschiedliche Abmessungen, insbesondere die der Querschnitte, der Prüflinge anpaßbar sind. Ein zweiter Nachteil ist in der ungenügenden Wärmeabfuhr zu sehen, die als dritten Nachteil der Lebensdauer der Vorrichtung enge Grenzen setzt und schließlich noch als vierten Nachteil die Magnetisierungsleistung begrenzt. Die Form der bei den angeführten Vorrichtungen eingesetzten Spulenkerne läßt sich bei isoliert gewickelten Bandkernen nur unter hohem finanziellen Aufwand verändern.

Es ist daher Aufgabe der Erfindung, eine Vorrichtung gemäß Oberbegriff des Anspruchs 1 so zu gestalten, daß sie leicht ohne großen Aufwand an unterschiedliche Prüflinge anpaßbar ist und sich durch eine hohe Wärmeabfuhr auszeichnet, um sowohl eine hohe Magnetisierungsleistung als auch Lebensdauer zu erzielen.

Die Erfindung löst diese Aufgabe mit den im Patentanspruch 1 angegebenen Merkmalen dadurch, daß sich mindestens zwei Jochschenkel mit ihren Spaltenden einen Spalt bildend gegenüberliegen, durch den der Prüfling führbar ist, daß auf jedem Spaltende eine Erregerspule sitzt, daß die Erregerspulen entgegengesetzt gepolt sind, daß die den Spaltenden gegenüberliegenden Außenenden der Jochschenkel mittels eines Magnetflußleiters miteinander verbunden sind, so daß der Magnetfluß senkrecht zur Längsrichtung des Prüflings durch den Prüfling verläuft.

Der Magnetflußleiter kann beispielsweise drei-, viereckförmig oder vorzugsweise ringförmig gestaltet sein. Durch die erfindungsgemäße Maßnahme, zwei Jochschenkel mit je einer Erregerwicklung so gegeneinander anzuordnen, daß zwischen den sich gegenüberliegenden Enden, den Spaltenden, ein Spalt gebildet wird, und die Außenenden der Jochschenkel über einen Magnetflußleiter miteinander zu verbinden, kann diese Anordnung aus einem Pulververbundwerkstoff preisgünstig hergestellt und an Prüflinge unterschiedlicher Abmessungen angepaßt werden, weil Pulververbundwerkstoffe leicht durch Sägen, Fräsen und Schleifen bearbeitbar sind. Die Außenenden der Jochschenkel können z. B. auf dem Magnetflußleiter aufliegen. Alternativ kann der Magnetflußleiter auf den Außenenden der Jochschenkel aufliegen. Über den Magnetflußleiter läßt sich sehr gut die durch Ummagnetisierung erzeugte Verlustwärme abführen. Die erfindungsgemäße Vorrichtung ist daher für hohe Magnetisierungsleistungen geeignet und zeichnet sich durch eine lange Lebensdauer aus.

Ausführungsbeispiele und Ausgestaltungen der Erfindung sind in den Unteransprüchen angegeben.

Um die erfindungsgemäße Vorrichtung an Prüflinge unterschiedlichen Querschnitts anpassen zu können, sind die Jochschenkel strahlenförmig in radialer Richtung verschieb- und feststellbar, wobei jedoch der Kontakt mit dem Magnetflußleiter unabhängig von der Stellung stets erhalten bleibt.

Die Induktionssonden sitzen bei einer weiteren Ausgestaltung der Erfindung auf Hebeln, die um eine Achse schwenkbar am Magnetflußleiter befestigt sind.

Ein weiteres Ausführungsbeispiel der Erfindung sieht vor, den vorzugsweise ringförmigen Magnetflußleiter gut wärmeleitend an einer drehbaren Rotierscheibe zu befestigen, an welcher zur besseren Wärmeabfuhr Kühllamellen oder dergleichen vorgesehen sein können. Zum Drehen der Rotierscheibe ist ein Rotationsantrieb vorgesehen.

Am Magnetflußleiter können mehr als zwei Jochschenkel mit je einer Erregerwicklung vorgesehen sein

Die Erfindung wird nun an Hand der Figuren näher beschrieben und erläutert.

In der Zeichnung zeigen:
- Fig. 1: den prinzipiellen Aufbau eines Ausführungsbeispieles der Erfindung in Draufsicht und
- Fig. 2: einen Längsschnitt des prinzipiellen Aufbaus des in Figur 1 gezeigten Ausführungsbeispieles der Erfindung.

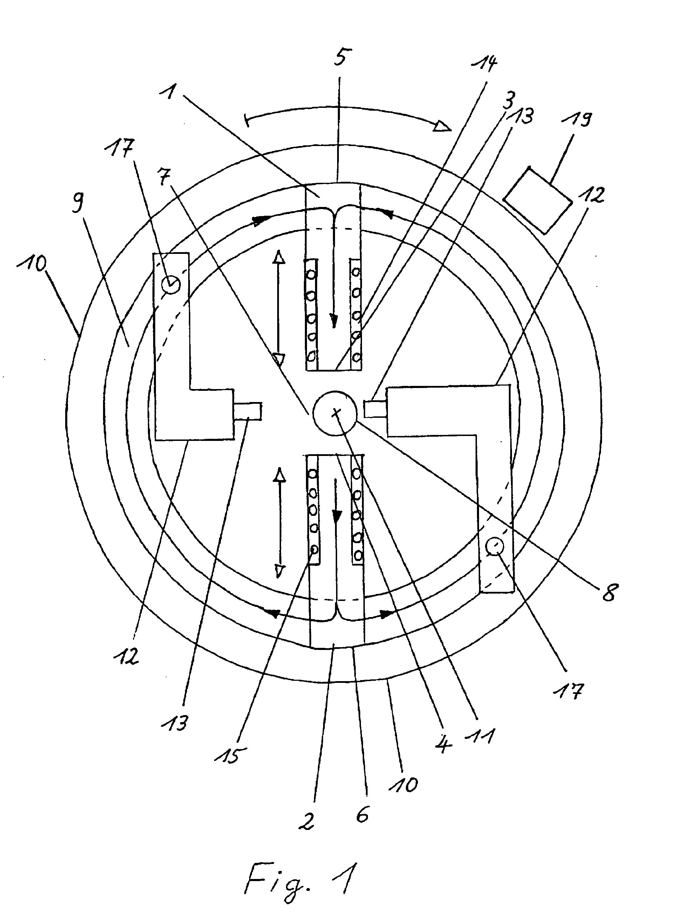

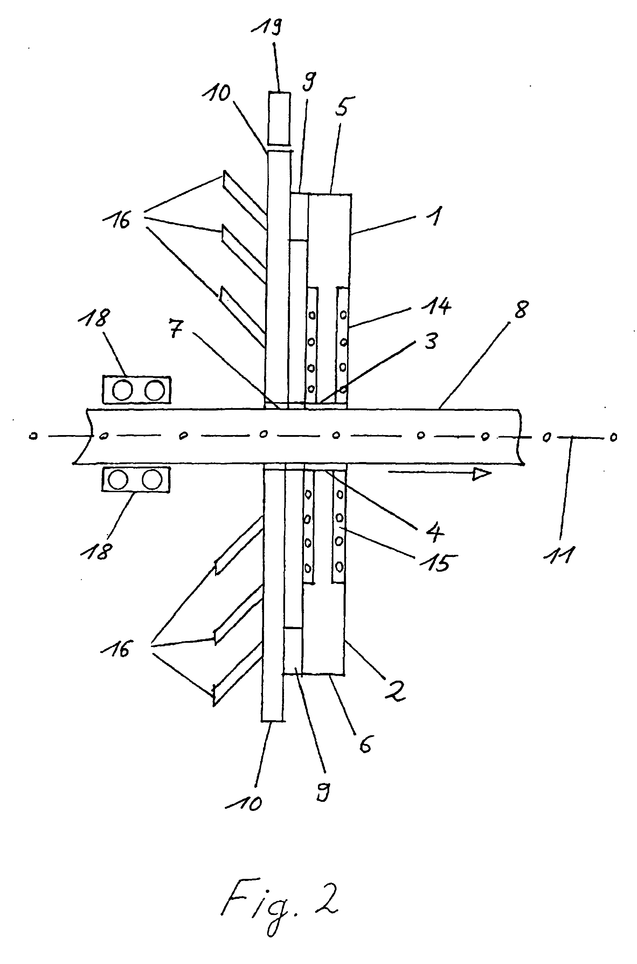

In den Figuren 1 und 2 sind zwei Jochschenkel 1 und 2 so einander gegenüber stehend angeordnet, daß zwischen ihren gegenüberliegenden Enden, den Spaltenden 3 und 4, ein Spalt 7 gebildet wird, durch welchen ein Prüfling 8 senkrecht zur Zeichenebene geführt wird. Auf den Spaltenden 3 und 4 der Jochschenkel 1 und 2 sitzen Erregerwicklungen 14 und 15. Die den Spaltenden 3 und 4 gegenüberliegenden Außenenden 5 und 6 sind über einen ringförmigen Magnetflußleiter 9, der auf einer Rotierscheibe 10 sitzt, verbunden. Auf dem Magnetflußleiter 9 sind zwei um eine Achse 17 schwenkbare Hebel 12 angeordnet, auf denen je eine Induktionssonde 13 sitzt. Zur Anpassung an Prüflinge unterschiedlichen Querschnitts sind die Jochschenkel 1 und 2 in Richtung der Doppelpfeile verschiebbar und feststellbar am ringförmigen Magnetflußleiter 9 befestigt.

Die Jochschenkel 1 und 2 sowie der Magnetflußleiter 9 sind vorzugsweise aus einem Pulververbundwerkstoff hergestellt. Auf der nicht sichtbaren Rückseite der Rotierscheibe 10 sind zur besseren Wärmeabfuhr in der Figur 1 nicht sichtbare Kühlmittel, z. B. Kühllamellen, angeordnet. Zur Prüfung des Prüflings 8 auf Fehler wird die Rotierscheibe 10 mit dem Magnetflußleiter 9 , den Jochschenkeln 1 und 2 und den Hebeln 12 mit den Induktionssonden 13 in Pfeilrichtung um die Längsachse 11 des Prüflings 8 mittels eines der Übersichtlichkeit wegen nur symbolisch dargestellten Rotationsantriebes 19 gedreht, während der Prüfling 8, z. B. eine Stange in einer Walzstraße, senkrecht zur Drehebene der Rotationsscheibe 10 geführt wird. Auf diese Weise wird der Prüfling 8 schraubenförmig abgetastet, um seine Güte zu prüfen.

Die Figur 2 zeigt einen Längsschnitt durch den prinzipiellen Aufbau des in der Figur 1 abgebildeten Ausführungsbeispieles. Der Prüfling 8 wird in Pfeilrichtung durch den Spalt 7 mittels einer schematisch dargestellten Vorschubeinrichtung 18 in Pfeilrichtung geführt, während gleichzeitig die Rotierscheibe 10 mit den Jochschenkeln 1 und 2 und dem Magnetflußleiter 9 um die Längsachse 11 des Prüflings 8 vom der Übersichtlichkeit wegen nur symbolisch dargestellten Rotationsantrieb 19 angetrieben rotiert. Auf der Rückseite der Rotierscheibe 10 sitzen Kühllamellen 16 zur Kühlung der Jochschenkel 1 und 2 und des Magnetflußleiters 9. - Durch die dargestellte spezielle Gestaltung des Magnetkreises relativ zum Prüfling 8 ergibt sich der entscheidende Vorteil, daß im Falle einer exzentrischen Lage des Prüflings der wirksame Luftspalt zwischen diesem und den Jochen als praktisch konstant und unabhängig von der Drehlage der Rotierscheibe 10 erweist. - Auf diese Weise reduziert sich eine sonst zu beobachtende Amplitudenschwankung des Fehlersignales erheblich.

Die Erfindung ist insbesondere zur Prüfung von Prüflingen mittels hochenergetischer magnetischer Wechselfelder geeignet, weil die bei diesem Verfahren erzeugten hohen Wärmeverluste ausreichend bei der erfindungsgemäßen Vorrichtung abgeführt werden.

### Bezugszeichenliste

- 1: Jochschenkel
- 2: Jochschenkel
- 3: Spaltende
- 4: Spaltende
- 5: Außenende
- 6: Außenende
- 7: Spalt
- 8: Prüfling
- 9: Magnetflußleiter
- 10: Rotierscheibe
- 11: Längsachse des Prüflings
- 12: Hebel
- 13: Induktionssonde
- 14: Erregerwicklung
- 15: Erregerwicklung
- 16: Kühllamelle
- 17: Drehachse
- 18: Vorschubeinrichtung
- 19: Rotationsantrieb

## Patentansprüche

1. Vorrichtung zur Prüfung eines Prüflings (8) auf Oberflächenfehler mit Magnetisierungsmittel (1, 2, 9, 14, 15) zum Einleiten eines Magnetflusses in den Prüfling (8) und mit Induktionssonden (13) als Meßsensoren, mit mindestens zwei mit ihren Spaltenden (3, 4) einen Spalt (7) bildenden und einander gegenüber liegenden Jochschenkeln (1, 2), mit einer Erregerspule (14, 15) auf jedem Spaltende (3, 4), mit entgegengesetzt gepolten Erregerspulen (14, 15), mit den Spaltenden (3, 4) gegenüberliegenden Außenenden (5, 6) der Jochschenkel (1, 2), die mittels eines ringförmigen Magnetflußleiters (9) miteinander verbunden sind, so daß der Magnetfluß senkrecht zur Längsrichtung des Prüflings durch den Prüfling (8) verläuft,
wobei der Prüfling (8) durch den Spalt (7) führbar ist und
wobei die Jochschenkel (1, 2) in radialer Richtung zur längsrichtung des Prüflings verschiebbar und feststellbar sind, um den Spalt (7) an Prüflinge (8) unterschiedlichen Querschnitts anpassen zu können,
**dadurch gekennzeichnet, daß** die Jochschenkel (1, 2) und der Magnetflußleiter (9) auf einer mittels eines Rotationsantriebes (19) drehbaren Rotierscheibe (10) angeordnet sind.

2. Vorrichtung nach Anspruch 1,**dadurch gekennzeichnet, daß** die Jochschenkel (1, 2) und/oder der Magnetflußleiter (9) aus einem Pulververbundwerkstoff hergestellt sind.

3. Vorrichtung nach Anspruch 1 oder 2, **dadurch gekennzeichnet, daß** der Magnetflußleiter (9) gut wärmeleitend mit der Rotierscheibe (10) verbunden ist.

4. Vorrichtung nach einem der vorangehenden Ansprüche, **dadurch**
**gekennzeichnet, daß** an der Rotierscheibe (10) Kühlmittel (16) zur Wärmeabgabe an die Umgebung vorgesehen sind.

5. Vorrichtung nach Anspruch 4, **dadurch gekennzeichnet, daß** als Kühlmittel Kühllamellen (16) vorgesehen sind.

6. Vorrichtung nach einem der vorangehenden Ansprüche, **dadurch gekennzeichnet, daß** die Induktionssonden (13) auf schwenkbaren Hebeln (12) sitzen.

7. Vorrichtung nach Anspruch 6, **dadurch gekennzeichnet, daß** die Hebel (12) schwenkbar am Magnetflußleiter (9) befestigt sind.

8. Vorrichtung nach einem der vorangehenden Ansprüche, **dadurch gekennzeichnet, daß** am Magnetflußleiter (9) mehr als zwei Jochschenkel (1, 2) angeordnet sind.

## Claims

1. Apparatus for testing a unit under test (8) for surface defects, having magnetization means (1, 2, 9, 14, 15) for introducing a magnetic flux into the unit under test (8) and having induction probes (13) as measurement sensors, having at least two mutually opposite yoke limbs (1, 2) whose gap ends (3, 4) form a gap (7), having a field coil (14, 15) on each gap end (3, 4), having field coils (14, 15) of opposite polarity, having outer ends (5, 6), which are opposite the gap ends (3, 4), of the yoke limbs (1, 2) which are connected to one another by means of an annular magnetic flux conductor (9), such that the magnetic flux runs through the unit under test (8) at right angles to the longitudinal direction of the unit under test,
in which case the unit under test (8) can be passed through the gap (7), and in which case the yoke limbs (1, 2) can be moved in the radial direction with respect to the longitudinal direction of the unit under test and can be fixed in order to allow the gap (7) to be matched to units under test (8) of different cross section,
**characterized in that** the yoke limbs (1, 2) and the magnetic flux conductor (9) are arranged on a rotating plate (10) which can be rotated by means of a rotating drive (19).

2. Apparatus according to Claim 1, **characterized in that** the yoke limbs (1, 2) and/or the magnetic flux conductor (9) are/is produced from a powder composite material.

3. Apparatus according to Claim 1 or 2, **characterized in that** the magnetic flux conductor (9) is connected in a highly thermally conductive form to the rotating plate (10).

4. Apparatus according to one of the preceding claims, **characterized in that** cooling means (16) for emitting heat to the surrounding area are provided on the rotating plate (10).

5. Apparatus according to Claim 4, **characterized in that** cooling laminates (16) are provided as cooling means.

6. Apparatus according to one of the preceding claims, **characterized in that** the induction probes (13) are seated on levers (12) which can pivot.

7. Apparatus according to Claim 6, **characterized in that** the levers (12) are attached to the magnetic flux conductor (9) such that they can pivot.

8. Apparatus according to one of the preceding claims, **characterized in that** more than two yoke limbs (1, 2) are arranged on the magnetic flux conductor (9).

## Revendications

1. Dispositif pour contrôler un échantillon (8) pour y déceler un défaut de surface, comprenant des moyens de magnétisation (1, 2, 9, 14, 15) pour induire un flux magnétique dans l'échantillon (8) et comprenant des sondes d'induction (13) faisant office de sondes de mesure, comprenant au moins deux branches de culasse (1, 2) formant un entrefer (7) avec leurs extrémités d'entrefer (3, 4) et opposées l'une à l'autre, comprenant une bobine excitatrice (14, 15) sur chaque extrémité d'entrefer (3, 4), comprenant des bobines excitatrices (14, 15) à polarités opposées, comprenant des extrémités extérieures (5, 6) des branches de culasse (1, 2) à l'opposé des extrémités d'entrefer (3, 4), lesquelles sont reliées entre elles au moyen d'un conducteur de flux magnétique (9) de forme annulaire de sorte que le flux magnétique passe à travers l'échantillon (8) perpendiculairement au sens longitudinal de l'échantillon, l'échantillon (8) pouvant être passé à travers l'entrefer (7) et les branches de culasse (1, 2) pouvant être déplacées et bloquées dans le sens radial par rapport au sens longitudinal de l'échantillon afin de pouvoir adapter l'entrefer (7) à des échantillons (8) ayant différentes sections transversales, **caractérisé en ce que** les branches de culasse (1, 2) et le conducteur de flux magnétique (9) sont disposés sur un disque rotatif (10) qui peut être mis en rotation au moyen d'un mécanisme d'entraînement de rotation (19).

2. Dispositif selon la revendication 1, **caractérisé en ce que** les branches de culasse (1, 2) et/ou le conducteur de flux magnétique (9) sont fabriqués dans un matériau composite poudreux.

3. Dispositif selon la revendication 1 ou 2, **caractérisé en ce que** le conducteur de flux magnétique (9) est relié au disque rotatif (10) avec une bonne conduction thermique.

4. Dispositif selon l'une des revendications précédentes, **caractérisé en ce que** des moyens de refroidissement (16) sont prévus dans le disque rotatif (10) pour dissiper la chaleur dans l'environnement.

5. Dispositif selon la revendication 4, **caractérisé en ce que** des ailettes de refroidissement (16) sont prévues comme moyens de refroidissement.

6. Dispositif selon l'une des revendications précédentes, **caractérisé en ce que** les sondes d'induction (13) reposent sur des leviers (12) pivotants.

7. Dispositif selon la revendication 6, **caractérisé en ce que** les leviers (12) sont fixés au conducteur de flux magnétique (9) de manière à pouvoir pivoter.

8. Dispositif selon l'une des revendications précédentes, **caractérisé en ce que** plus de deux branches de culasse (1, 2) sont disposées sur le conducteur de flux magnétique (9).
